# EUROPEAN PATENT APPLICATION

(11) **EP 2 371 778 A1**
(43) Date of publication of application: **05.10.2011**
(21) Application number: 10003459.4
(22) Date of filing: 30.03.2010
(51) Int. Cl.: C03C 17/22, C03C 21/00, C03C 17/00

(54) **Method for producing toughened flat glass with anti-reflective properties**

(71) Applicant: Linde AG, 80331 München (DE)
(72) Inventor: Petrova-Koch, Vesselinka, 85738 Garching (DE); Mahrenholtz, Hans, 85221 Dachau (DE); Carney, Stephen, 81245 München (DE)
(74) Representative: Kasseckert, Rainer

(57) **Abstract**

The invention relates to a method for producing glass comprising the steps of melting a glass composition to form a glass melt, forming said glass melt, annealing said formed glass, and applying a potassium silicate solution to the surface of said formed glass.

## Description

The invention relates to a method for producing glass comprising the steps of melting a glass composition to form a glass melt, forming said glass melt and annealing said formed glass.

Flat glass manufacturing can be considered to include rolled glass, patterned glass, drawn glass, figured glass and float glass manufacturing.

The basic process for the production of flat glass is described in the patent of L. A. B. Pilkington et al. US 2,911,759 according to which a flat glass is produced in ribbon form. A ribbon is formed of molten glass. The ribbon is cooled to an extent sufficient to make it stiff enough to stabilise its dimensions and thereafter the ribbon is directed onto a bath of molten tin. The ribbon is floated and continuously advanced on the tin bath, wherein the surface of the ribbon is softened and then progressively and sufficiently cooled before leaving the bath.

It is also known to create anti-reflective coatings on flat glass by deposition of SiO₂ porous films on the glass surface using tetraethyl orthosilicate (TEOS) as a crosslinking agent. However, this is also a multi-step off-line process.

All known ways for modifying the surface are performed off-line on individual pieces of flat glass or other materials.

Therefore, it is an object of the invention to provide a glass with an inherent anti-reflective surface structure that is formed during the flat glass manufacturing process while the glass is still in ribbon form.

It is known to toughen or temper glass by means of controlled thermal or chemical treatments to increase its strength compared with normal glass. Toughened or tempered glass can be made from annealed glass via a thermal tempering process. The glass is heated above its softening temperature and then cooled with forced air drafts while the inner portion remains free to flow for a short time. In tempering of glass the cooling is more rapid than in toughening of glass.

By toughening and tempering glass balanced internal stresses are created which give the glass strength. The greater contraction of the inner layer during manufacturing induces compressive stresses in the surface of the glass balanced by tensile stresses in the body of the glass. It is this compressive stress that gives the toughened glass an increased strength.

Annealed glass with internal stress removed must be cut and/or edged and/or drilled before thermal toughening or thermal tempering. Toughened glass is used when strength, terminal resistance and safety are important considerations. The most commonly accounted tempered glass is that used for side and rear windows and automobiles, used for its characteristic of shattering into small cubes rather than large shards.

The chemical process for producing toughened glass involves forcing a surface layer of glass into compression by ion exchange of the sodium ions in the glass surface with larger potassium ions, by e.g. emersion of the glass into a bath of molten potassium nitrate. Chemical toughening results in increased toughness compared with thermal toughening, and can be applied to glass objects of complex shape. The following documents discuss certain aspects of chemical toughening of glass:
- H. Yunqiu et al., "Mechanical strength improvement of glass by ion exchange in the solid state" Journal of Non-Cristalline Solids 80 (1986) 283-291, North-Holland, Amsterdam,
- K.K. Mallick et al., "Strengthening of container glasses by ion-exchange dip coating", Journal of non-crystalline solids 351 (2005) 2524-2536;
- J. Shen et al.; "Effect of the K/Na ratio in mixed-alkali lime silicate glasses on the rheological and physical properties", Journal of Non-Crystalline Solids 344 (2004) 66-72
- K. Kamada et al.; "Crack-free lithium ion injection into alkali silicate glass using Li+ conduction microelectrodes", Solid state ionics 176 (2005) 1073-1078;
- B. Samuneva et al.; "Interaction between glasses and alkali metal vapours", Journal of non-cristalline solids 112 (1989) 385-391 North-Holland, Amsterdam.

A glass composition which is particularly suitable for a chemical toughening operation is disclosed in US 6,333,285 B1.

US 4,218,230 discloses a method of glass strengthening by ion exchange. An aqueous solution containing tripotassium or dipotassium phosphate is sprayed on the glass while it is in a heated condition so that the water flashes off leaving the potassium salt deposited on the hot glass surface.

From EP 2 075 237 A1 it is known to ion-exchange K2O in a KNO3 molten salt for a Li2O and Na2O component in a glass substrate for forming a compression stress layer.

All the above mentioned documents relating to toughening and/or tempering are incorporated by reference.

All of these methods are applied to finished products that are handled as individual items in off-line processes.

Therefore, an object of the invention is to provide a method for toughening flat glass during the glass manufacturing process while the glass is still in ribbon form.

Another object of the present invention is to provide a method for producing glass with an anti reflective surface

According to the prior art chemical toughening of the glass is carried out as an off-line process, i.e. as a process external to the glass manufacturing process. Such an off-line toughening process requires packaging of the glass for delivery to the toughening unit, transportation of the glass to the toughening unit and additional process energy for toughening. All in all additional costs arise.

Provision of a modified surface structure to the glass, such as anti-reflection coating, as an off-line process requires the same burdens as described for an external toughening process.

Therefore, the invention shall provide a method for in-line provision of an anti reflective surface structure and/or a nano-structured surface.

Another object of the invention is to provide a method for in-line toughening flat glass, in particular for toughening flat glass before it is cut, edged or drilled.

At least one of the objects is solved by a method according to claim 1. Advantageous embodiments of the invention are characterized in the subclaims.

The inventive method for producing glass comprises the steps of:
- melting a glass composition to form a glass melt,
- forming said glass melt,
- annealing said formed glass,
wherein a potassium silicate solution is applied to the surface of said formed glass.

According to the invention a potassium silicate solution is applied to the formed glass in order to modify the properties of the glass, in particular to toughen or harden the glass and/or to modify the surface structure of the glass.

The term "potassium silicate solution" shall mean a chemical compound of the structure Kₓ(Si0₂)_{y} which is dissolved in a liquid or mixed with a liquid. Preferably, the potassium silicate is in an aqueous solution, i.e. Kₓ(SiO₂)_{y} + H₂O. Such a solution is often also referred to as potassium water glass.

The invention can be used to produce any kind of glass, for example tube glass, glass bulbs, mirror glass or glass used in the automotive industry. A preferred field of application is the production of flat glass, in particular of float glass. In the following the invention will be explained with reference to the production of flat glass. However, the described embodiments shall not be limited to flat glass but shall be understood to be applicable to the production of any other kind of glass.

It has been found that potassium silicate can be used as both the precursor for chemical toughening and the source for silicon dioxide nano-particles required to develop an anti-reflective surface. The potassium ions can also be used for an ion exchange toughening process. Therefore, the inventive application of a potassium silicate solution or of potassium silicate solutions to the glass allows to toughen the glass as well as to modify the surface structure of the glass, for example in order to create an anti-reflection surface.

Preferably, the glass melt is formed to flat glass in form of a continuous ribbon and the potassium silicate is applied to the surface of the continuous glass ribbon. In a particular preferred embodiment the potassium silicate solution is applied to float glass. The invented process can be integrated into the glass manufacturing process and can be carried out in-line. Toughening of the glass and/or creating an anti-reflective surface structure can be achieved in-line and in particular before the flat glass has been cut, edged and/or drilled.

Of course, it is also possible to first machine, cut, edge or drill the glass and then apply potassium silicate in a separate external off-line process step. However, it is preferred to perform the glass manufacturing process and the inventive application of potassium silicate in-line in order to reduce the complexity and the costs of the process.

According to a preferred embodiment of the invention the potassium silicate is applied to the surface of the flat glass before or during or directly after said annealing step. The application of potassium silicate is preferably carried out after the hot glass melt has been formed into a glass ribbon which is done either by floating or by rolling. On the other hand, the potassium silicate is applied to the glass still within the glass manufacturing line, that is before the glass ribbon is cut into the desired pieces. The invention preferably utilizes the temperature and condition of the flat glass during the annealing step, i.e. between the end of the forming step and the glass ribbon cutting step at the end of the glass manufacturing line.

The invention is especially useful for toughening, tempering or hardening flat glass, i.e. for increasing its strength compared with annealed glass. Within this application the terms "toughening", "tempering" and "hardening" are used as synonyms if not explicitly otherwise stated. For toughening or tempering the flat glass is treated with the inventive potassium silicate solution in order to exchange smaller mass ions by larger mass ions in a surface layer of the flat glass during the forming of the glass ribbon or before or during or directly after the annealing of the flat glass. This surface treatment makes use of the glass temperature during the production process for producing flat glass so that in comparison to ordinary methods less additional energy is required to achieve the ion exchange reactions or the chemical reactions for replacing sodium ions in the allotted process time.

With this treatment the concentration of "smaller ions", in particularly the concentration of sodium ions or lithium ions in the treated surface layer of the flat glass is reduced.

The reduction of the concentration of sodium ions results in an increase of the compressive stress in the layer which improves the overall strength of the flat glass. This is particularly effective if the sodium and/or lithium ions are exchanged by larger potassium ions.

This treatment is particularly advantageous applied on the surface of a flat soda-lime-silicate glass because such flat soda-lime-silicate glass has usually a micro-thin surface layer in which sodium ions are concentrated at levels higher than in the bulk glass. This high concentration of sodium ions in the micro-thin surface layer can be reduced to or below the concentration level of the bulk glass.

Such a surface layer with a reduced sodium concentration is particularly advantageous for using the flat glass as substrate for electrical devices such as photovoltaic cells. Due to the migration of sodium ions the function of electronic contacts and electronic layers, particularly thin film layers, can be interfered. Due to the reduced concentration of sodium ions in the surface layer according to the present invention the migration of sodium ions is significantly reduced and the disturbance of electrical devices due to the migration of sodium ions is significantly reduced. Furthermore, the reduced sodium ion transfer secures that the rate of loss of photovoltaic cell efficiency over the lifetime of a photovoltaic cell and the loss of efficiency of coatings used on an architectural solar glass is avoided.

Due to the temperature of the flat glass during its production process the exchanging of ions and/or the chemical reactions between the ions and the glass are enhanced. For toughening the flat glass a potassium silicate solution is preferably applied to the flat glass above 400 °C and below a temperature which is 50 °C above the glass transition temperature T_{g}. Thus, the preferred temperature range for toughening is between 400 °C and T_{g} + 50 °C. In this temperature range ion exchange of the sodium ions in the glass surface with the larger potassium ions occurs which creates balanced internal stresses which give the glass its strength.

The glass transition temperature is the temperature at which liquid glass changes to an amorphous structure. Different operational definitions of the glass transition temperature exist. In this application the glass transition temperature shall mean the transition temperature based on a measurement of the energy release on heating in differential scanning calorimetry (DSC). The glass transition temperature depends on the cooling rate, molecular weight distribution and can be influenced by additives.

However, this treatment shall be carried out at a stage where the flat glass is not too hot, because the hotter the glass is, the more likely the surface layer will relax and reduce the internal stresses. Such a relaxation would reduce the mechanical strength of the glass. Therefore, the upper limit of the temperature of the flat glass shall be not more than 50 °C above the glass transition temperature during the treatment for achieving an optimal mechanical strengthening.

It has been found that for toughening flat glass the molar ratio of SiO₂ to KOH in the potassium water glass is preferably between 5% and 25% in order to get the best toughening results.

The inventive process for toughening the flat glass is based on an ion exchange of the sodium ions with larger potassium ions. A lower sodium ion concentration combined with a glass chemistry in the weight percent ranges SiO₂ 63% - 73%, Al₂O₃ 3% - 8%, MgO 0.5% - 6%, CaO 4% - 12%, K₂O 0.1% - 4%, Na₂O 12% - 15%, LiO₂ 0% - 1 % that favors ion exchange and if a dielectric layer is provided on the glass surface then a lower sodium ion concentration reduces the incident of migration of sodium ions from the glass through the dielectric layer. These two effects are particularly advantageous if the flat glass is used as a substrate for a solar cell or a solar module.

The inventive application of a potassium silicate solution cannot only be used to toughen the glass but also to produce a nano-structured glass surface.

Without wishing to be bound by any theory it is assumed that the SiO₂ in the potassium silicate polymerizes to self-assembled nano particles containing for example 100 SiO₂ molecules. OH groups are bonded only to the surface of these particles. Gel formation is inhibited by the K⁺ OH⁻ complexes which hold the nano-particles apart. The silicon dioxide nano particles are bonded with the glass ribbon to form a monolithic body.

A major advantage in comparison to known glass coatings is that the nano-structured surface is part of a monolithic body of the glass ribbon.

According to the invention, the properties of the nano-structure, for example the anti-reflection properties of the flat glass, are developed by bonding silicon dioxide nano-particles to the surface of the glass and controlling the rate of bonding. The control of the bonding rate can be by direct measurement of the produced nano-structure, for example by an optical measurement, or by an indirect measurement, for example by determining the flow of potassium silicate solution applied to the glass.

The nanostructured surface is preferably embodied in such a way that surface texture formed by the nano particles have a height of 50 nm to 500 nm and preferably 100 nm to 300 nm.

When the application of the potassium silicate solution is carried out before or during or directly after the annealing of the glass the temperature of the glass is normally sufficiently high to bond the silicon dioxide nano particles. In general, it is not necessary to additionally heat the glass. Thus, energy savings can be achieved.

For generating the nano-structured surface and to achieve the anti-reflective property the temperature of the glass, especially of the glass ribbon, is preferably between room temperature and the evaporation temperature of the potassium silicate in the potassium silicate solution. That means, during the application of the potassium silicate solution to the glass, the glass temperature is below the evaporation temperature of the potassium silicate in the potassium silicate solution, preferably in the range 150 °C to 300°C. These temperatures are substantially lower than the melting temperature of bulk glass but sufficient to bond the silicon dioxide nano particles onto the glass ribbon. It is even possible to create a nano-structured glass surface by applying a potassium silicate solution to the flat glass in the temperature range between 50 °C and 150 °C or at or slightly above room temperature.

According to a preferred embodiment the molar ratio of SiO₂ to KOH in the potassium water glass is preferably between 25% and 60% for producing the nano-structured surface, in particular for achieving anti-reflection properties.

The potassium silicate solution is preferably applied to or deposited on the glass ribbon by means of a carrier gas. The carrier gas can also be heated. However, the temperature of the carrier gas must not be so high to cause evaporation of the potassium silicate solution during the transfer to the glass surface. In order to achieve the best results the temperature of the glass surface shall cause the evaporation not the carrier gas. The appropriate temperature depends very much on the silicate solution and the individual glass composition. A heated carrier gas stream reduces the thermal shock to the glass when the potassium silicate solution hits the glass surface.

Due to the nanostructure the flat glass has an improved anti-reflection property. As already mentioned above the nano-structure cannot only be generated on flat glass but also on any other kind of glass.

According to a preferred embodiment, in the production of flat glass the glass is first toughened by the inventive application of a potassium solution and then the anti-reflective properties are achieved by the inventive application of a potassium silicate solution.

Preferably the nanostructured surface of the flat glass is at least once toughened by a chemical process applied below the softening temperature of the flat glass and by cooling the flat glass in the annealing process. Preferably the toughening step is carried out in-line of the production process. If necessary a final toughening or tempering can be made after cutting, etching and drilling.

Furthermore, the present invention relates to a glass pane or a sheet of glass produced by the inventive method and which has a thickness of not more than 3.2 mm and preferably not more than 2.4 mm. Preferably, the glass pane has a nanostructured surface, wherein the nanostructured surface is formed in the surface of the body of the glass pane which has a substantially uniform composition.

Ordinary glass panes having a nanostructure have a coating in which the structure is formed. The coating has a different composition than the residual body of the glass pane. The glass pane according to the present invention has both in the surface portion of the body which is adjacent to the structured surface as well as in the central portion of the body of the pane substantially the same composition. Of course the composition of the surface portion of the body which is adjacent to the structured surface can differ to the composition of the central portion by a lower concentration of sodium ions which were withdrawn at the toughening or tempering process. Besides such smaller changes of the ion concentration the composition is substantially the same in the inner and in the surface portion of the glass pane. Thus the glass pane forms an integral body with the structured surface.

A solar module having a glass pane as described above provides substantial advantages over known solar modules, because the surface of the glass pane has anti-reflecting characteristics and optimum light transmission is secured. These characteristics are maintained through the complete lifetime of the solar module as the nanostructure is formed in the integral body of the glass pane. Further advantages are achieved if the surface, particularly the structured surface is toughened or tempered, because then the sodium ion concentration is reduced which causes a reduced danger of deterioration of the light transmission and reduces the migration of sodium ions from the glass to other elements of the solar module.

According to a preferred embodiment of the invention a potassium silicate solution is applied to the flat glass in order to toughen the flat glass and to create a nano-structured surface. As described above chemical toughening is achieved by ion exchange of the sodium ions by K+ ions. The anti-reflection properties are developed by bonding silicon dioxide nano-particles to the glass surface.

Therefore, it is possible to toughen the glass and to create a nano-structured surface by a one-step application of potassium silicate solution to the glass. However, it has been found that these two reactions - toughening of the glass and developing of a nano-structured surface - can be further enhanced by providing optimum conditions.

According to a preferred embodiment glass toughening and creation of the structured surface are carried out as separate steps. In a first step, preferably at a high temperature slightly below the softening temperature of the glass, potassium silicate of a defined first composition is applied to the glass. For example, at this stage the temperature of the glass should be above 400 °C and the proportion of K⁺ ions in the potassium silicate solution should be increased to enhance the ion exchange reaction.

In a second step a potassium silicate solution of a defined second composition is applied to the glass. This second composition as well as the temperature range of application is optimized in view of the development of a nano-structured surface. Since the surface structure is achieved by bonding silicon dioxide nano-particles to the glass surface it is preferred to shift the molar ratio of SiO₂ to K₂O in the potassium water glass towards SiO₂ compared to the toughening step. Further, the optimum temperature for generating the nano-structured surface and the anti-reflective properties is lower than the temperature of the inventive glass toughening.

Both steps - toughening of the glass and generating the anti-reflective properties - are preferably carried out during or immediately after the annealing step, that is both of these steps are performed in-line as part of the glass manufacturing process.

It is also possible to toughen the flat glass by another chemical or by a thermal toughening process. In that case the anti-reflective surface structure or in general the nano-structured surface can also be created by the inventive application of potassium silicate solution.

The invention is explained in more detail by means of the accompanying drawings. In the drawings it is shown in:
Fig. 1 the cross-section of a production site for producing flat glass in a simplified illustration,

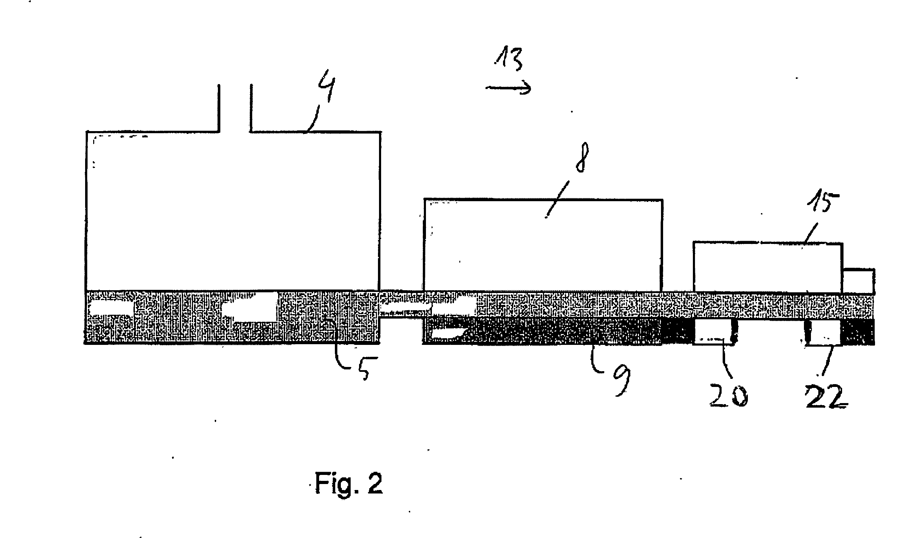

Fig. 2 schematically the flat glass production with an application unit for applying potassium silicate onto a glass ribbon, and
Fig. 3a and 3b a portion of glass pane with a micro- or nanostructure in a cross setional view with an optimal (Fig. 3a) and a realistic (Fig. 3b) structure.

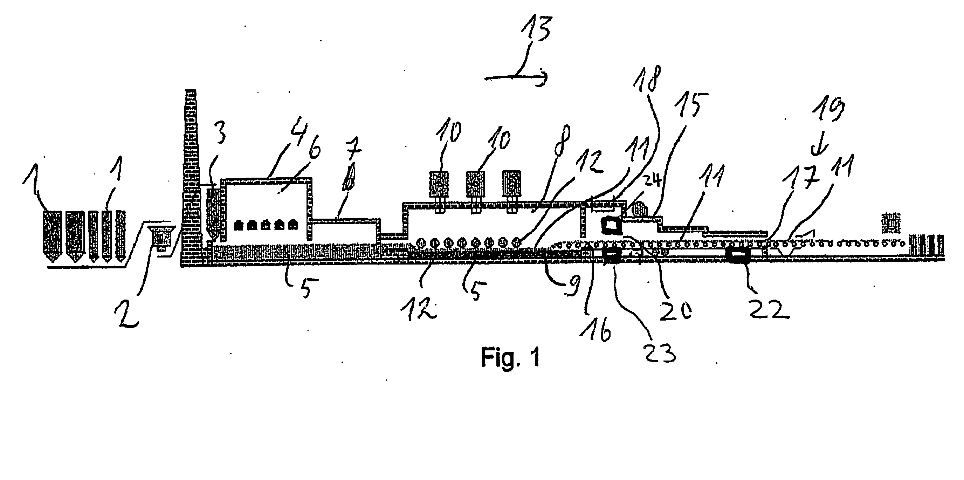

Fig. 1 shows in a simplified illustration a production site for producing flat glass which is suitable for carrying out the present invention. The production site comprises containers 1 for storing raw material for the glass production. The raw material is mixed to a batch and collected in a batch container 2. From the batch container 2 the batch is conveyed to a charging silo 3 for charging a glass furnace 4 with the batch. The furnace is heated to a temperature above 1200°C for melting the batch to molten glass 5. Preferably, the molten glass is a soda lime glass. Then the temperature of the furnace 4 is adjusted to at least 1500°C.

The preferred glass composition is a soda lime glass.

The molten glass 5 flows from a melting chamber 6 in the furnace to a discharge chamber 7 and from the discharge chamber 7 of the glass furnace 4 into a tin bath chamber 8. The tin bath chamber 8 comprises a bath with molten tin or with a molten tin alloy 9. The tin bath chamber 8 comprises heating elements 10 for providing a certain temperature profile.

A ribbon of molten glass 5 is floating on the molten tin 9, wherein the ribbon of glass is formed on the molten tin to a flat and smooth float glass which is a certain kind of flat glass 11. In the tin bath chamber 8 rollers 12 are provided which are in contact with the upper surface of the flat glass 11. The rollers 12 are driven for moving the flat glass in a transportation direction 13. At the end of the tin bath chamber 8 the flat glass 11 is picked up by conveyer mechanism which usually comprises a plurality of rollers 14. By means of this conveyor mechanism the flat glass 11 is transported through an annealing lehr 15. The annealing lehr 15 comprises an entrance 16 through which the flat glass 11 enters the annealing lehr 15 and an exit 17 through which the flat glass 11 leaves the annealing lehr 15. The annealing lehr 15 comprises a heating element 18 which provides a temperature profile which varies in transportation direction 13. At the entrance 16 the temperature is about 600°C, wherein at the exit 17 the temperature is reduced to about 200°C. At the exit the flat glass 11 has been cooled down to a temperature of about 200°C. The flat glass 11 is then conveyed to a cutting line 19 in which the ribbon of the flat glass 11 is cut in separate glass panes. Further processing stations for bending, grinding, drilling, tempering and toughening can follow.

In the annealing lehr 15 close to its entrance 16 a glass toughening unit 20 is provided. The glass toughening unit 20 comprises two application units 23, 24 located beneath and above the transportion path of the flat glass 11. The application units 23, 24 are used to apply a potassium silicate solution by means of a carrier gas to both sides of the flat glass 11 and thereby toughen the flat glass 11. The stream of potassium silicate solution and carrier gas is directed to the upper and to the lower surface of the flat glass 11.

Potassium silicate in solution with water is also called potassium liquid glass or potassium silicate. The liquid glass is provided in form of an aqueous solution so it can be sprayed by a spraying mechanism into the carrier gas stream. The spraying mechanism comprises a pump and a nozzle which is designed to diffuse the potassium liquid glass into fine droplets.

Close to the exit 17 of the annealing lehr 15 an application unit 22 for creating a nano-structured surface is provided. The application unit 22 is used to apply a potassium silicate solution to one side of the flat glass 11. The application unit 22 can be placed below or above the flat glass 11.

All application units 22, 23, 24 of the present embodiment comprise a blower for blowing potassium silicate by means of a carrier gas. The carrier gas is utilized to provide the atmospheric conditions required to optimize the glass and precursor reactions that develop the desired toughening and/or creating the nano-structured surface. The atmospheric control is achieved using an inert gas or a mixture of inert gases, preferably nitrogen.

The molar ratio of the potassium silicate applied to the flat glass 11 by means of the glass toughening unit 20, respectively application units 23, 24, and the temperature and atmospheric conditions during application are controlled to optimize the toughening process. For example, the potassium silicate solution is applied at a temperature above 400 °C in order to enhance the ion exchange of sodium ions by potassium ions. The molar ratio of K⁺ ions to SiO₂ is preferably shifted towards K⁺.

On the other hand, application unit 22 is used to produce a nano-structured surface on the flat glass 11 and to generate anti-reflective properties. Therefore, application unit 22 is placed close to the exit of the annealing lehr 15 where the glass 11 has already cooled down and where the temperature of the glass 11 has been reduced to below 300 °C. Also the composition of the potassium silicate solution used for creating the anti-reflective structure differs from the composition used in the glass toughening unit 20. The molar ratio of SiO₂ to KOH is preferably between 25% and 60%, i.e. it is shifted towards SiO₂ compared to the molar ratio used for toughening the glass 11.

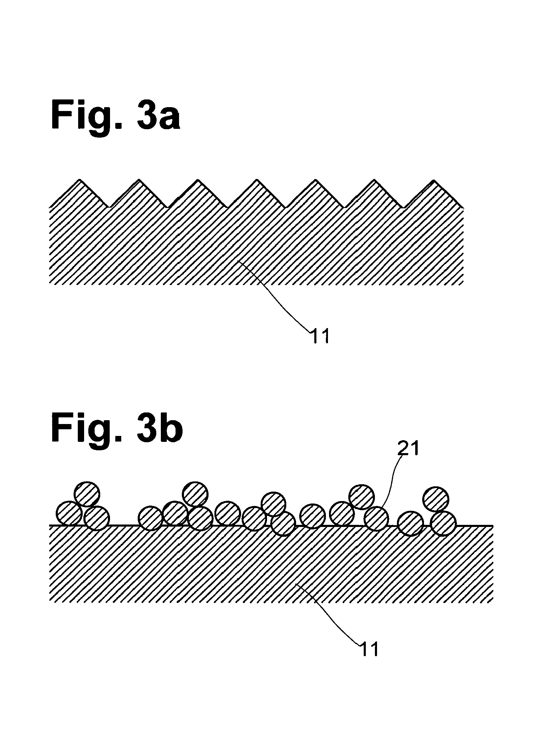

The optimum surface structure would have triangular trenches as schematically shown in Fig. 3a. This would provide perfect anti-reflection properties and also very good self cleaning characteristics. The inventive application of potassium silicate solution to the glass surface produces a textured surface with a random distribution such that a nanostructured porous surface is created which has good antireflection properties and potentially self cleaning characteristics.

As the application of potassium silicate and the creation of the nano-structured surface is done in-line of the production process of flat glass the temperature of the flat glass before or in the annealing lehr 15 or directly after the annealing lehr 15 is used for enhancing the bonding of silicon dioxide nano-particles to the glass surface. The optimum temperature can be selected by placing the application unit 20 at the position of the transportation path where the optimum temperature is set by the temperature profile of the process line, in particular of the annealing lehr 15.

In the above described example of the invention the flat glass is a float glass which is produced by means of floating on a tin bath. The present invention can also be used in the production of other types of flat glass including rolled glass, patterned glass, drawn glass, and figured glass. For example the glass melt can be formed by rollers to a glass ribbon to which a potassium silicate solution is applied. Irrespective of the type of production method for producing the flat glass the application of potassium silicate is preferably carried out onto the hot glass ribbon in the production line. In the above described production process for achieving the anti-reflective surface structure potassium silicate solution is applied only to one side of the glass ribbon. However, if appropriate potassium silicate can be applied to both sides of the glass ribbon to form on both sides a nanostructured surface.

Preferably, the toughening of the glass 11 is achieved by in-line application of potassium silicate solution as explained with reference to toughening unit 20 and application units 23, 24. But it is also possible to subject the flat glass to a toughening by another chemical process or by heating and cooling the flat glass. The chemical toughening process can also be carried out before, in or after the annealing lehr 15.

The flat glass produced according to the present invention is particularly suitable as substrate, cover plate and/or base plate for solar modules. Solar modules using such a substrate or cover plate or base plate can achieve a longer lifetime and a higher efficiency due to the self cleaning characteristics and the anti reflection properties.

A preferred area of application of the invention is the production of flat solar glass. Flat solar glass can be defined as plate glass that has enhanced transmission of the electromagnetic spectrum in the range of 400nm to 1000nm where photovoltaic cells can convert photon energy to electrical energy. Enhanced transmission shall mean a transmittance of more than 90% in the wavelength range between 400 nm and 1000 nm. Solar flat glass transmission can be affected by the glass chemistry, the production process combustion space chemical species, the flat glass forming process and by surface modifications that enhance the conversion efficiency of the photovoltaic cell under the flat solar glass cover plate.

The flat glass produced according to the above described procedure is made with a thickness of 3.2 mm. It is intended to reduce the thickness to 2.0 to 2.4 mm while achieving the same or better mechanical properties as available from the thicker glass.

The invention can be used to produce flat solar glass. The solar glass is toughenend in-line and an anti-reflection surface is created in-line, i.e. toughening and generation of the anti-reflection properties are achieved during the glass manufacturing process before the flat glass is cut into pieces, preferably during forming the flat glass, during annealing the glass or between both process stages.

In a first step potassium silicate is applied to both sides of the hot glass for toughening the glass. The term "hot" shall mean that the temperature of the glass is for example between 400 °C and 600 °C. The potassium silicate is applied to both sides of the flat glass or the glass ribbon in order to achieve a distortion control. Preferably, the toughening process is carried out during the glass forming process, between glass forming and annealing or at the beginning of the annealing process where the temperature is still high.

When the flat glass has been cooled down, for example to a temperature between 50 °C and 200 °C, pootassium silicate of a different molar ratio is applied to one surface of the flat glass to produce the desired anti-reflective characteristics.

The inventive toughening as well as the inventive creation of the nanostructured surface are preferably carried out in a controlled atmosphere, for example in an inert atmosphere. The potassium silicate is preferably applied by means of a carrier gas which might - but need not - be heated to reduce the heat shock. If necessary any residues on the glass surfaces may be removed prior to and/or after generating the nanostructured surface.

Before or during the application of the potassium silicate solution to the glass - either for toughening or for creating the nanostructured surface - it can be advantageous to control the temperature of the glass surfaces to optimize the desired chemical reactions. Such a temperature control can for example be achieved by means of burners, halogen lamps or radio waves.

### List of references:

- 1: container
- 2: batch container
- 3: charging silo
- 4: glass furnace
- 5: molten glass
- 6: melting chamber
- 7: discharge chamber
- 8: tin bath chamber
- 9: molten tin/molten tin alloy
- 10: heating elements
- 11: flat glass
- 12: roller
- 13: transportation direction
- 14: roller
- 15: annealing lehr
- 16: entrance
- 17: exit
- 18: heating element
- 19: cutting line
- 20: toughening unit
- 21: recess
- 22: application unit for potassium silicate
- 23: application unit for potassium silicate
- 24: application unit for potassium silicate

## Claims

1. Method for producing glass (11) comprising the steps of:
- melting a glass composition (1) to form a glass melt (5),
- forming said glass melt (5),
- annealing said formed glass (15),
**characterized in that**
- a potassium silicate solution (22, 23, 24) is applied to the surface of said formed glass (11).

2. Method according to claim 1,
**characterized in that**
said glass melt (5) is formed to flat glass (11).

3. Method according to claim 2
wherein said glass melt (5) is formed to flat glass (11) in form of a continuous ribbon.

4. Method according to any of claims 1 to 3,
wherein potassium silicate solution (22, 23, 24) is applied to the surface of said glass before or during or directly after said annealing step (15).

5. Method according to any of claims 1 to 4
wherein said potassium silicate solution (23, 24) is applied to the surface of the glass in a temperature range between 400 °C up to 50 °C above the glass transition temperature.

6. Method according to any of claims 1 to 5
wherein potassium silicate having a molar ratio of SiO₂ to KOH between 5 % and 25 % is applied to both the surfaces of said glass (11).

7. Method according to any of claims 1 to 6
wherein the glass is hardened, especially thermally hardened, prior to applying potassium silicate to the surface of the glass for anti-reflective purposes.

8. Method according to any of claims 1 to 7
wherein said potassium silicate solution (23, 24) is applied to the surface of the glass (11) at a temperature between room temperature and the evaporation temperature of the potassium silicate in said potassium silicate solution, preferably between 150 °C and 300 °C.

9. Method according to any of claims 1 to 8
wherein potassium silicate having a molar ratio of SiO₂ to KOH between 25 % and 60 % is applied to the surface of said glass (11).

10. Method according to any of claims 1 to 9
wherein said potassium silicate solution (22, 23, 24) is applied to said glass in an inert atmosphere.

11. Method according to any of claims 1 to 10
wherein by said application of potassium silicate solution (22) to the surface of said glass.(11) a nano structured surface (21) is produced comprising a structures with a depth of 50 nm to 500 nm, preferably 100 nm to 300 nm.

12. Method according to any of the claims 2 to 11
wherein said flat glass (11) is formed either by pouring said glass melt on a bath of molten tin or by rolling said glass melt.

13. Method according to any one of the claims 2 to 12
wherein the flat glass (11) is made of soda lime glass.

14. Method according to any one of the claims 1 to 13
wherein potassium silicate solution is applied to the formed glass in a first step (23, 24) in order to toughen or temper the glass and in a second step (22) in order to produce a nano-structured surface.

15. Glass pane, wherein the glass pane is produced by the method according to one of the claims 1 to 13 and the glass pane has a thickness of not more than 3.2 mm and preferably not more than 2.4 mm.
